(19)

**Europäisches Patentamt**
**European Patent Office**
**Office européen des brevets**

(11)    **EP 3 012 944 B1**

(12)                    **EUROPEAN PATENT SPECIFICATION**

(45) Date of publication and mention
of the grant of the patent:
**10.06.2020   Bulletin 2020/24**

(51) Int Cl.:
**H02K 3/34** *(2006.01)*        **H02K 3/12** *(2006.01)*

(21) Application number: **15190575.9**

(22) Date of filing: **20.10.2015**

(54) **ROTATING ELECTRIC MACHINE, ROTATING ELECTRIC MACHINE DRIVING SYSTEM, AND RAILWAY VEHICLE**

ELEKTRISCHE ROTATIONSMASCHINE, ELEKTRISCHES ROTATIONSMASCHINENANTRIEBSSYSTEM UND SCHIENENFAHRZEUG

MACHINE ÉLECTRIQUE TOURNANTE, SYSTÈME D'ENTRAÎNEMENT D'UNE TELLE MACHINE ET VÉHICULE FERROVIAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **20.10.2014   JP 2014213311**

(43) Date of publication of application:
**27.04.2016   Bulletin 2016/17**

(73) Proprietor: **Hitachi Industrial Products, Ltd.**
**Tokyo 101-0022 (JP)**

(72) Inventors:
• **KUNIHIRO, Naoki**
**Tokyo, 100-8280 (JP)**
• **KORI, Daisuke**
**Tokyo, 100-8280 (JP)**
• **NISHIHAMA, Kazuo**
**Tokyo, 100-8280 (JP)**
• **SUGIMOTO, Shinji**
**Tokyo, 100-8280 (JP)**
• **KOIKE, Masatoshi**
**Tokyo, 100-8280 (JP)**

• **MARUYAMA, Shoichi**
**Tokyo, 100-8280 (JP)**
• **FUKUOKA, Yuki**
**Tokyo, 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
**US-A1- 2005 206 263      US-B1- 6 758 430**
**US-B1- 6 794 777      US-B2- 8 546 991**

• **WENLIANG CHEN ET AL: "Strand-level finite element model of stator AC copper losses in the high speed machines", ELECTRICAL MACHINES (ICEM), 2012 XXTH INTERNATIONAL CONFERENCE ON, IEEE, 2 September 2012 (2012-09-02), pages 477-482, XP032464761, DOI: 10.1109/ICELMACH.2012.6349912 ISBN: 978-1-4673-0143-5**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the Invention

The present invention relates to a rotating electric machine capable of reducing a copper loss occurring in a stator winding and a rotating electric machine driving system and a railway vehicle using it.

Description of Prior Art

Rotating electric machines such as motors and power generators have been widely used in industries, but as a social trend, there have been demands for providing a rotating electric machine which satisfies requests for energy saving and resource saving. Thus, many improved technologies intended to achieve increased efficiency of the rotating electric machine have been provided, which becomes a main subject.

Then in the rotating electric machine, through development of a low-loss material, optimized design of the rotating electric machine, etc., reduction in a fundamental harmonic loss has been advanced. The reduction in the fundamental harmonic loss increases a ratio occupied by a harmonic loss. The harmonic loss is mainly divided into two, and the loss of the rotating electric machine is increased by: a spatial harmonic loss attributable to a structure of the rotating electric machine, for example, a slot shape or winding arrangement of the rotating electric machine; and a time-harmonic loss attributable to a harmonic component included in a voltage waveform at time of inverter driving. As efficiency-increasing technologies for reducing these harmonic losses, technologies described in the following Patent Documents are known.

With the technology described in "Japanese Patent Application Laid-open No. 2012-146473" (Patent Document 1), for reducing the time-harmonic loss occurring in a stator winding, a thickness of a conductor is made smaller than a skin depth of a current.

With the technology described in "Japanese Patent Application Laid-open No. 2012-39836" (Patent Document 2), for reducing the time-harmonic loss occurring in a stator winding, a thickness of a conductor is set to be equal to or less than a skin depth obtained from an alternating magnetic field.

With the technology described in "Japanese Patent Application Laid-open No. 2002-27693" (Patent Document 3), for reducing the time-harmonic loss occurring in a stator winding, a conductor of a winding for a rotating electric machine is press-molded in a manner such as to form a bundle of rectangular sections formed of a plurality of strands.

With the technology described in "Japanese Patent Application Laid-open No. 2014-23413" (Patent Document 4), for reducing the spatial and time-harmonic losses occurring in a rotor bar, a shape of a circumferential tip of a rotor teeth part has a convex part projecting in an arc-like form from the teeth tip part towards a conductor bar in a slot.

With the technology described in "Japanese Patent Application Laid-open No. 2011-87373" (Patent Document 5), for reducing the spatial harmonic loss occurring in a rotor bar, a depth of a space at a tip part of a rotor slot is equal to or more than one third of a width of the rotor slot.

With the technologies described in Patent Documents 1 to 3 above, the time-harmonic loss in the stator winding can be reduced, but it is difficult to meet a request on the rotating electric machine for achieving increased efficiency. Moreover, the technologies in Patent Documents 4 and 5 reduce a harmonic secondary copper loss in a conductor of the rotor of an induction motor, and it is difficult to apply it to the stator winding.

In US 2005/206263 A1 a multi-set rectangular copper hairpin winding for an electric machine is described. A first winding set and a second winding set are positioned in the stator slots. The first winding set and the second winding set are connected by adjacent leg ends.

In US 8 546 991 B2 a synchronous generator including a rotor having a field winding placed in the slots thereof and a stator having an armature winding placed in the slots thereof is described. The value of the number of slots per two poles in a stator minus the number of slots per two polas in a rotor is equal to or greater than 9, or equal to or smaller than -9.

In US 6 794 777 B1 a flywheel system is described. Electric power is stored in said flywheel system from a DC power buss, and supplied to the buss through power electronics associated with a motor/generator.

SUMMARY OF THE INVENTION

Thus, the present invention reduces the harmonic loss occurring in the stator winding, and provides a high-efficiency rotating electric machine, and also provide a rotating electric machine driving system and a railway vehicle using this rotating electric machine.

To address the problem described above, a rotating electric machine according to the present invention includes:

a stator having a stator winding including a plurality of conductors; and a rotor opposing the stator with a gap in between. In the rotating electric machine, each thickness of the conductors is set at a value equal to or less than a skin depth for a spatial harmonic of a magnetic flux in the gap.

Moreover, a rotating electric machine driving system according to the present invention includes: a converter converting power inputted from a power source into three-phase AC power and outputting the power; and a rotating electric machine being driven into rotation by the three-phase AC power outputted by the converter. In the rotating electric machine driving system, the rotating electric machine is the rotating electric machine according to the present invention described above.

Further, a railway vehicle according to the present invention includes: a truck; a plurality of wheels rotationally pivoted at the truck; and a rotating electric machine driving the plurality of wheels. In the railway vehicle, the rotating electric machine is the rotating electric machine according to the present invention described above.

According to an aspect of the present invention, a loss caused by the spatial harmonic occurring in the stator winding can be reduced, thus permitting an improvement in efficiency of the rotating electric machine. Moreover, a loss occurring in the railway vehicle driven by the rotating electric machine driving system and the rotating electric machine can be reduced.

Problems, configuration, and effects other than those described above will be clarified with reference to descriptions of embodiments below.

BRIEF DESCRIPTION OF THE DRAWINGS

FIG. 1 shows overall configuration and a partial sectional view of a rotating electric machine according to a first embodiment of the present invention;
FIG. 2 shows principles of a spatial harmonic loss caused by permeance pulsation;
FIG. 3 shows relationship between a permeance pulsation frequency and a width of a conductor according to the first embodiment;
FIG. 4 shows a partial sectional view of a stator winding of a rotating electric machine according to a second embodiment of the present invention;
FIG. 5 shows one example of relationship between a copper loss occurring in the stator winding and a thickness of a conductor;
FIG. 6 shows a comparison in a degree of a copper loss according to a stator winding structure;
FIG. 7 shows a partial sectional view of a stator winding of a rotating electrical machine according to a third embodiment of the present invention;
FIG. 8A shows a partial sectional view of a stator winding of a rotating electric machine according to a fourth embodiment of the present invention;
FIG. 8B shows a partial sectional view of the stator winding of the rotating electric machine according to the fourth embodiment of the present invention;
FIG. 9 shows a partial sectional view of a stator winding of a rotating electric machine according to a fifth embodiment of the present invention;
FIG. 10 shows a partial sectional view of a stator winding of a rotating electric machine according to a sixth embodiment of the present invention;
FIG. 11 shows a rotating electric machine driving system according to a seventh embodiment of the present invention;
FIG. 12 shows a railway vehicle according to an eighth embodiment of the present invention; and
FIG. 13 shows one example of relationship between an order of a harmonic and a ratio of a harmonic component with respect to a fundamental harmonic.

DETAILED DESCRIPTION OF THE INVENTION

Hereinafter, details of the embodiments of the present invention will be described with reference to the drawings. In the figures, the same reference numerals show the same components or components including a similar function. Note that overall configuration of a rotating electric machine described in the first embodiment applies to each of the embodiments.

First Embodiment

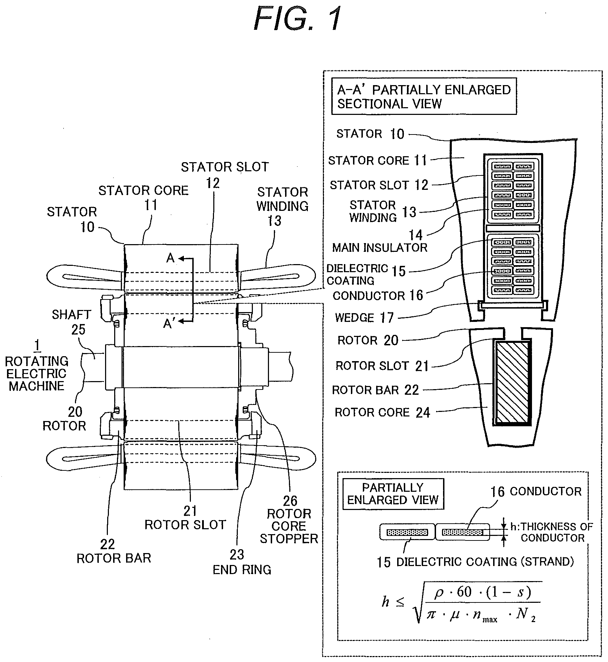

FIG. 1 shows overall configuration and a partial sectional view of a rotating electric machine, i.e. an induction motor used for, for example, a railway vehicle according to a first embodiment of the present invention. The partial sectional view shows a cross section taken along line A-A' of the overall configuration.

In FIG. 1, a stator 10 has, at its inner circumferential part, a stator slot 12 formed continuously in an axial direction, and includes: a stator core 11 having a plurality of thin steel sheets such as magnetic steel sheets laid along the axial direction; and a stator winding 13 wound around the stator slot 12.

The stator winding 13 is configured with winding, several times in the stator slot 12, a conductor 16 having a substantially rectangular shape in cross section. An outer circumferential surface of each conductor 16 is covered with a dielectric coating 15 formed of, for example, a laminated body of a glass cloth or mica. This avoids electrical contact between the mutually adjacent conductors 16 in a partial cross section as shown in FIG. 1, that is, in the stator slot 12, avoiding conduction therebetween. Furthermore, these conductors 16 are stored in the stator slot 12 in a state in which a plurality of conductors 16 are bundled together with a main insulator 14 formed of, for example, a resin composition. As a result, in the first embodiment, in the stator slot 12, two stator windings each having the plurality of conductors coated with the dielectric coating 15 are stored in parallel along a radial direction of a stator or a rotating electric machine. On each of the stator windings, the plurality of conductors provided with the dielectric coating 15 are laminated in two rows so that a thickness direction of each conductor becomes the radial direction of the rotating electric machine. Then such a laminated body is coated with the main insulator 14, forming one stator winding.

In this embodiment, the stator slot 12 is an open slot. Thus, the stator winding 13 is fixed at the stator core 11 with a wedge 17 fitted in a groove provided at an opening part of the stator slot 12 opposing a rotor 20.

The stator 10 and the rotor 20 located on a coaxial inner circumference side are disposed at a predetermined interval with a gap provided in between in a circumferential direction, and the rotor 20 has, at its outer circumference part, a plurality of rotor slots 21 formed continuously in the axial direction, and has a rotor core 24 having a plurality of thin steel sheets such as electromagnetic steel sheets laid along the axial direction. Further, the rotor 20 includes: rotor bars 22 formed of a conductor of, for example, copper inserted in the plurality of axially extending rotor slots 21; end rings 23 which are installed on both end sides of the rotor core 24 having thin steel sheets such as electromagnetic steel sheet laid along the axial direction and which are formed of copper and the like as annular conductors electrically connecting together a plurality of rotor bars 22 by brazing an outer circumferential end part and an end part of the rotor bar 22; a shaft 25 arranged on an inner circumference side of the rotor core 24 where its longitudinal direction is the axial direction; and rotor core stoppers 26 on both end surfaces of the rotor core 24.

In this embodiment, on an outer circumferential surface of the rotor core 24, a groove is provided, which forms an opening part on a stator 10 side in the rotor slot 21, and a width of the groove in a circumferential direction of the rotor 20 is narrower than a width of the rotor slot 21. Specifically, the rotor slot 21 in this embodiment has a so-called half-closed rotor slot shape such that an outer circumferential side of the rotor bar 22 is partially covered with the rotor core 24 at the opening part of the rotor slot 21. The groove on the outer circumferential surface of such a rotor core 24 is provided for the purpose of efficiently interlinking, with the rotor bar 22, a magnetic flux generated upon distribution of a three-phase alternating current through the stator winding 13, that is, for the purpose of reducing magnetic flux leakage to improve a power factor. However, providing the groove on the outer circumferential surface of the rotor core 24 causes spatially easy passage of the magnetic flux, that is, pulsation in permeance, thus generating pulsation in spatial magnetic field distribution.

According to a study by the inventor, a spatial harmonic loss occurring in the stator winding by the permeance pulsation deteriorates efficiency of the rotating electric machine. The study by the inventor will be described below.

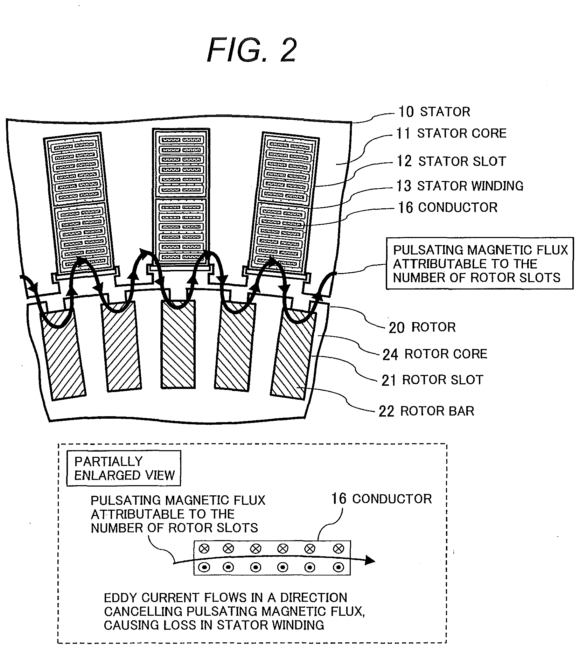

FIG. 2 shows principles of the spatial harmonic loss caused by the permeance pulsation. Magnetic permeability of the rotor core 24 is generally approximately 1000 to 3000, and magnetic permeability of the groove portion on the outer circumferential surface of the rotor core 24 (air) is 1. That is, viewing from the stator winding 13, upon rotation of the rotor 20, a portion through which a magnetic flux easily passes and a portion through which the magnetic flux hardly passes (air) alternately pass. That is, the interlinkage magnetic flux with the conductor 16 located on an inner circumference side of the stator winding 13 has a frequency component in accordance with the number of rotor slots 21 and a rotation speed of the rotor 20. At this point, a change in the amount of interlinkage magnetic flux with the conductor 16 of the stator winding 13 causes eddy current to be induced into the conductor 16 in a direction cancelling the pulsating magnetic flux in accordance with the amount of this change. Thus, a conduction region in the conductor 16 is biased to vicinity of the surface of the conductor 16. Thus, as is the case with a so-called skin effect provided in a case where a high-frequency current is caused to flow to the conductor 16, a loss occurring in the conductor 16 increases. As a result of this loss, efficiency of the rotating electric machine deteriorates.

Thus,, in this embodiment, the thickness of the conductor 16 is set to be equal to or less than a skin depth provided by the permeance pulsation frequency generated based on a structure of the rotating electric machine (in this embodiments, the number of rotor slots 21) and the specifications of the rotating electric machine to thereby reduce the permeance pulsation frequency loss occurring in the conductor 16 of the stator winding 13 to increase efficiency of the rotating electric machine. Note that a degree of bias of the conduction region caused in the conductor 16 by the permeance pulsation is indicated as "skin depth" as is with a case of a normal skin effect.

The setting of the thickness of the conductor 16 for the purpose of reducing the loss caused by the permeance pulsation frequency will be described. The thickness of the conductor 16 described here refers to a thickness h of a conductor shown in the partial enlarged view of FIG. 1.

To set the thickness of the conductor 16, the inventor applies relational expression of a skin depth provided by a general skin effect to the "skin depth" provided by the "permeance pulsation". Specifically, where electrical resistivity of the conductor 16 is $\rho(\Omega \cdot m)$, magnetic permeability of the conductor 16 is $\mu(H/m)$, and the permeance pulsation frequency is fp(Hz), the skin depth d(m) is expressed by formula (1):

$$d = (\rho / (\pi \cdot f_P \cdot \mu))^{0.5} \ldots (1).$$

The permeance pulsation frequency fp is calculated based on the structure of the rotating electric machine (the number of rotor slots 21), the specifications (rotation speed), etc. Note that a variable-speed rotating electric machine driven by, for example, an inverter is used under various rotation speed conditions, and thus the skin depth d in formula (1) varies in accordance with the rotation speed, and becomes minimum at a maximum rotation speed of the rotating electric machine. That is, a loss caused by the conductor 16 varies in accordance with the rotation speed of the rotating electric machine and becomes maximum at the maximum rotation speed of the rotating electric machine. Thus, to reduce the loss caused by the permeance pulsation frequency to achieve increased efficiency in all speed regions, it is preferable that the skin depth d is calculated with reference to the maximum rotation speed defined by the specifications of the rotating electric machine.

Relationship between the maximum rotation speed $n_{max}$ (min$^{-1}$) and a power source frequency fmax (Hz) at the maximum rotation speed is expressed by formulae (2) and (3), where the number of pairs of poles is P and slip is s:

$$n_{max} = 60 \cdot f_{max} \cdot (1-s) / P \ldots (2),$$

and

$$f_{max} = n_{max} \cdot P / (60 \cdot (1-s)) \ldots (3)$$

Moreover, where the number of rotor slots 21 is $N_2$, the number of rotor slot 21 which pass relatively the stator winding 13 upon rotation of the rotor 20 in one cycle of an electric angle of an AC power source is $N_2/P$, and thus the permeance pulsation frequency $f_p$(Hz) is expressed by formula (4):

$$f_p = f_{max} \cdot (N_2 / P) = n_{max} \cdot N_2 / (60 \cdot (1-s)) \ldots (4)$$

The skin depth d (m) provided by the permeance pulsation frequency is expressed by formula (5) by substituting formula (4) for formula (1):

$$d = (\rho \cdot 60 \cdot (1-s) / (\pi \cdot \mu \cdot n_{max} \cdot N_2))^{0.5} \ldots (5)$$

Specifically, as shown in FIG. 1, making the thickness h (m) of the conductor 16 smaller than the skin depth d calculated from formula (5) can reduce the loss caused by the permeance pulsation frequency. In a case where the slip s is included in the maximum rotation speed $n_{max}$ (min$^{-1}$) described in the specifications, the skin depth provided by the permeance pulsation frequency is expressed by formula (6):

$$d = (\rho \cdot 60 \cdot (1-s) / (\pi \cdot \mu \cdot n_{max} \cdot N_2))^{0.5} \ldots (6)$$

Hereinafter, in this embodiment, an example of calculation of the thickness h (m) of the conductor 16 targeted for the rotating electric machine for a railway vehicle will be shown.

Where the electrical resistivity of the conductor 16 is $2.50 \times 10^{-8}(\Omega \cdot m)$, the magnetic permeability of the conductor 16 is $1.26 \times 10^{-6}$ (H/m), the maximum rotation speed of the rotor 20 is 5000 (min$^{-1}$), the number of rotor slots 21 is 50, and the slip is 0.03 (=3%), based on formula (5), the skin depth d is expressed by formula (7) and a range of the thickness h of the conductor 16 permitting increased efficiency is expressed by formula (8):

$$d=(2.50\times10^{-8} \cdot 60 \cdot (1-0.03)/(\pi \cdot 1.26\times10^{-6} \cdot 5000 \cdot 50))^{0.5}=0.00121(m)\dots(7), \text{ and}$$

and

$$h\leq d=0.00121(m)\dots(8).$$

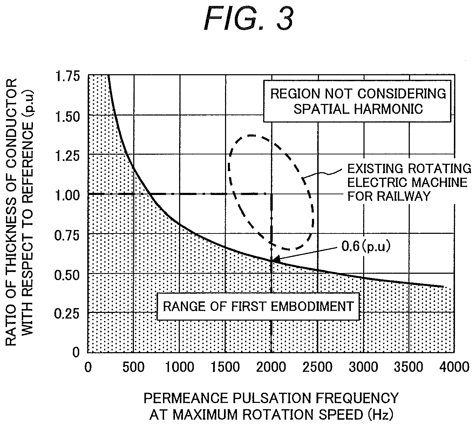

FIG. 3 shows relationship between the permeance pulsation frequency fp and the thickness h of the conductor 16 in this embodiment. In FIG. 3, a horizontal axis denotes the permeance pulsation frequency fp(Hz) set by the number of rotor slots 21 and the maximum rotation speed of the rotating electric machine, and a vertical axis denotes a thickness ratio (p.u) of the conductor 16. In FIG. 3, a shaded range is a region of this embodiment. Note that the ratio (p.u) of the thickness of the conductor 16 indicated by the vertical axis is provided where the permeance pulsation frequency within a range of the existing rotating electric machine for a railway is 2000 (Hz) as a reference (1.0). Moreover, the thickness of the conductor 16 is calculated by using formula (1), whereas, as values of the electric resistivity (Ω·m) of the conductor 16 and the magnetic permeability (H/m) of the conductor 16, usual values in a conductor used in the conventional rotating electric machine for a railway are used.

As shown in FIG. 3, the thickness of the conductor 16 of the existing rotating electric machine for a railway is set in a region not considering the permeance pulsation frequency shown in FIG. 3. Moreover, the thickness 0.6 (p. u) calculated for this embodiment where the permeance pulsation frequency is 2000 (Hz) is 1.7 times thinner than a conventional value (1.0p. u.) as the reference. That is, the thickness of the conductor in this embodiment is too small for the existing rotating electric machine and thus is not applied.

Effects of this embodiment will be described in comparison with those of the prior arts.

It is conventionally known that the thickness of the conductor is made smaller than the skin depth of the current in order to reduce a time-harmonic loss occurring in the conductor in association with a so-called skin effect attributable to a power source frequency of a voltage applied to the rotating electric machine (see, for example, Patent Documents 1 to 3). In these prior arts, a loss attributable to the spatial harmonic provided by the structure of the rotating electric machine is not considered.

Moreover, it is conventionally known that the spatial harmonic is considered as is the case with this embodiment and a shape of the rotor slot is improved to reduce the harmonic loss occurring in the rotor conductor (see, for example, Patent Documents 4 and 5). However, although these arts consider the spatial harmonic, they do not consider a spatial harmonic loss occurring in a stator winding.

In contrast, in this embodiment, based on new knowledge that a loss is caused in the conductor of the stator by the spatial harmonic attributable to the permeance pulsation frequency based on the number of rotor slots and the rotation speed of the rotor, this loss can be reduced by setting the thickness of the conductor of the stator winding at the skin depth in accordance with the permeance pulsation frequency or below.

The inventor, with reference to the smallest thickness of the conductor 16 used in the existing rotating electric machine for a railway (1. 0 p. u), based on the aforementioned prior art (for example, Patent Documents 1 to 3), the thickness of the conductor 16 with respect to the power source frequency (0 to 200 Hz) used in the existing rotating electric machine for a railway is studied and is approximately 3.84 (p. u). Such a value is larger than the thickness of the conductor 16 used in the existing rotating electric machine for a railway, and is a value further away from the thickness provided by this embodiment.

This embodiment is targeted for the induction motor for a railway, but is also applicable in the same manner to other rotating electric machines having permeance pulsation.

Moreover, in this embodiment, the shape of the rotor slot 21 is half-closed, but also in case of a full-closed slot having a greater pulse in the magnetic flux than the half-closed slot, a large loss-reducing effect can be provided. Moreover, as is the case with an aluminum die cast rotor, it can also be applied to a case where aluminum (non-magnetic body) is filled in a half-closed part of the rotor slot in the rotor core, providing the same effect.

Further, as a material used for the rotating electric machine of this embodiment, any material to which formulae (5) and (6) are applicable can be applied.

As described above, according to the first embodiment, by setting the thickness of the conductor of the stator winding at a value equal to or less than the skin depth provided by the permeance pulse frequency, preferably such a value that can be calculated by formulae (1), (5), and (6), the losses occurring in the stator winding can be reduced to achieve increased efficiency.

Second Embodiment

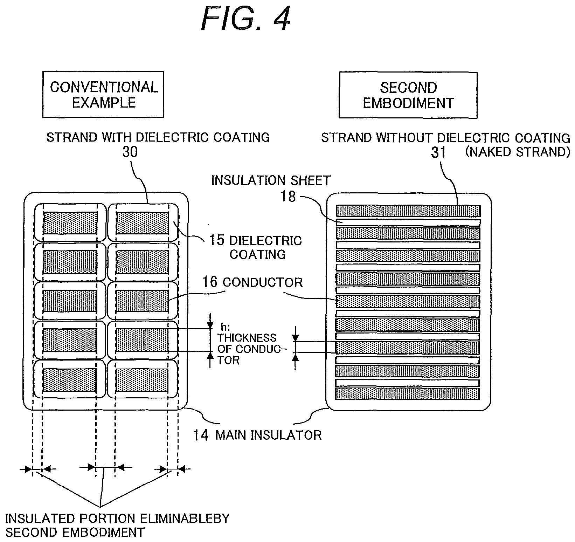

FIG. 4 shows a partial sectional view of a stator winding of a rotating electric machine according to the second embodiment of the present invention. For comparison, a conventional example will also be described. The second embodiment is different from the first embodiment in that a naked strand having an outer circumferential surface of a conductor 16 not covered with a dielectric coating 15 is provided, an insulation sheet 18 lies between the adjacent conductors 16, and these conductors 16 and the insulation sheets 18 are alternately arranged along a radial direction of a stator or a rotor in a stator slot 12 in a manner such that a thickness direction of each conductor becomes a radial direction of the rotating electric machine. Within a cross section of the stator slot 12, a height direction of the stator slot 12, that is, in the radial direction of the rotating electric machine, a plurality of conductors 16 are arrayed in two rows in the conventional example, while they are arrayed in a row in the second embodiment. Thus, a width of one conductor can be widened to approximately a width of the stator slot 12. Along with this and insulation configuration of the stator winding in the second embodiment to be described below, in the second embodiment, a conductor occupation ratio in the stator slot 12 can be increased. The thickness of each conductor 16 is set at a value equal to or less than the skin depth provided by the permeance pulsation frequency, as is the case with the first embodiment.

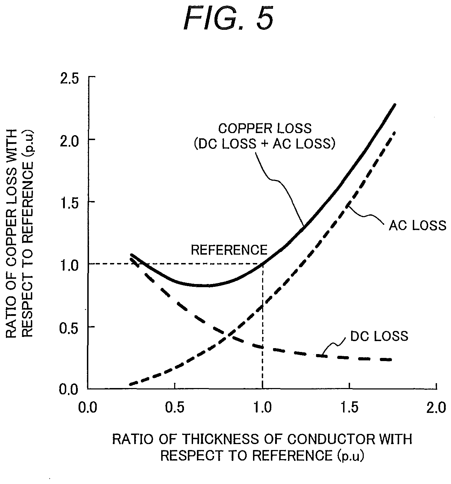

FIG. 5 shows one example of relationship between a copper loss occurring in the stator winding and the thickness of the conductor. The copper losses occurring in the stator winding can be divided into: a DC loss as a result of DC resistance; and an AC loss as a result of high-frequency resistance attributable to the permeance pulsation frequency and the like. In a case where a strand 30 with a dielectric coating used in the conventional example is thinned, while the AC loss can be considerably reduced, an occupation ratio of the conductor 16 in the stator slot 12 decreases and the DC loss increases. That is, the DC loss and the AC loss are in trade-off relationship. For such trade-off relationship, in the conventional example and the first and second embodiments, the same trend is indicated although they have mutually different degrees of loss. According to the second embodiment, as described below, the DC loss can be reduced to improve the trade-off relationship between the DC loss and the AC loss.

In this second embodiment, the strands 31 without a dielectric coating and the insulation sheets 18 are arranged in a manner such as to be alternately laid in the radial direction of the rotating electric machine. That is, in the radial direction, without depending on the dielectric coating of the strand, by using the insulation sheet 18, the adjacent conductors 16 are insulated from each other. Here, in order that electrical dielectric strength is ensured by only the insulation sheet 18, dielectric properties of the insulation sheet 18 (tan5, a partial discharge start voltage, a maximum discharged charge amount, and dielectric breakdown), a thickness dimension, a material, etc. are selected. Moreover, in a different direction, without depending on the dielectric coating of the strand and the insulation sheets 18, insulation is ensured by a main insulator 14 coating the surroundings of the laid plurality of conductors 16 and plurality of insulation sheets 18. Therefore, while ensuring desired dielectric properties, in the cross section of the stator slot 12, a ratio occupied by the dielectric member (occupation ratio) can be reduced.

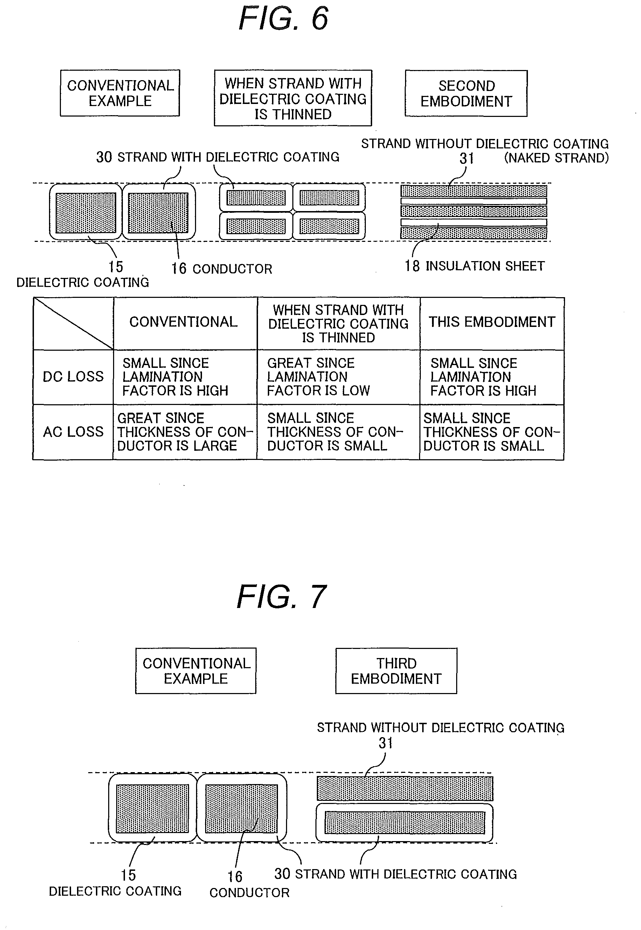

FIG. 6 shows comparison in degrees of copper losses (DC loss and AC loss) caused by the stator winding structures including the second embodiment. For each structure, the stator slots have the same space.

As shown in FIG. 6, in the second embodiment, as described above, while reducing the AC loss (harmonic loss) by setting the thickness of the conductor 16 at the value equal to or less than the skin depth provided by the permeance pulsation frequency, the occupation ratio of the insulating member can be reduced in the cross section of the stator slot 12 to improve the occupation ratio of the conductor 16 and thereby reduce the electric resistance of the conductor 16, which can therefore permits reduction in the DC loss.

As described above, according to the second embodiment, in addition to the reduction in the spatial harmonic loss provided by the permeance pulsation frequency, the DC loss of the stator winding can also be reduced, thus permitting reduction in losses occurring in the stator winding to achieve increased efficiency of the rotating electric machine.

Third Embodiment

FIG. 7 shows a partial sectional view of a stator winding of a rotating electric machine according to the third embodiment of the present invention. The third embodiment differs from the first and second embodiments in that a strand 30 with a dielectric coating and a strand 31 without a dielectric coating can be used together.

In the third embodiment, the strands 30 with a dielectric coating and the strands 31 without a dielectric coating are arrayed in a row alternately in a slot height direction in a cross section of a stator slot, that is, the radial direction of the rotating electric machine. Thus, in the stator slot, a region between the adjacent conductors 16 is insulated by the dielectric coating of the strand 30 having a dielectric coating. Here, dielectric strength is ensured by only the dielectric coating of the strand 30.

According to the third embodiment, as is the case with the second embodiment, a ratio occupied by a dielectric member in a cross section of the stator slot can be reduced to improve an occupation ratio of the conductor 16. Further, in the third embodiment, in order to insulate a region between the conductors 16 in a process of manufacturing a stator winding, as long as the strands 30 with a dielectric coating and the strands 31 without a dielectric coating are prepared, a process of laying dielectric members such as the insulation sheets 18 in the second embodiment can be omitted, which can therefore simplify the manufacturing process. For example, as the detailed manufacturing process, molding the stator winding 13 by using a winding machine from two kinds of windings rolls of the strand 30 with a dielectric coating and the strand 31 without a dielectric coating permits manufacture of a stator winding with a structure such that a plurality of thin conductors 16 whose thickness is set at a value equal to or less than the skin depth provided by the permeance pulsation frequency are laid.

In this embodiment, a total of two kinds including one kind of the strand 30 with a dielectric coating and one kind of the strand 31 without a dielectric coating are provided, but a sectional area of the conductor may be varied or the thickness of the dielectric coating may be varied to use three or more kinds of strands.

As described above, according to the third embodiment, the losses occurring in the stator winding can be reduced to achieve increased efficiency of the rotating electric machine and also the manufacture of the stator winding can be made easy, reducing costs of the rotating electric machine.

Fourth Embodiment

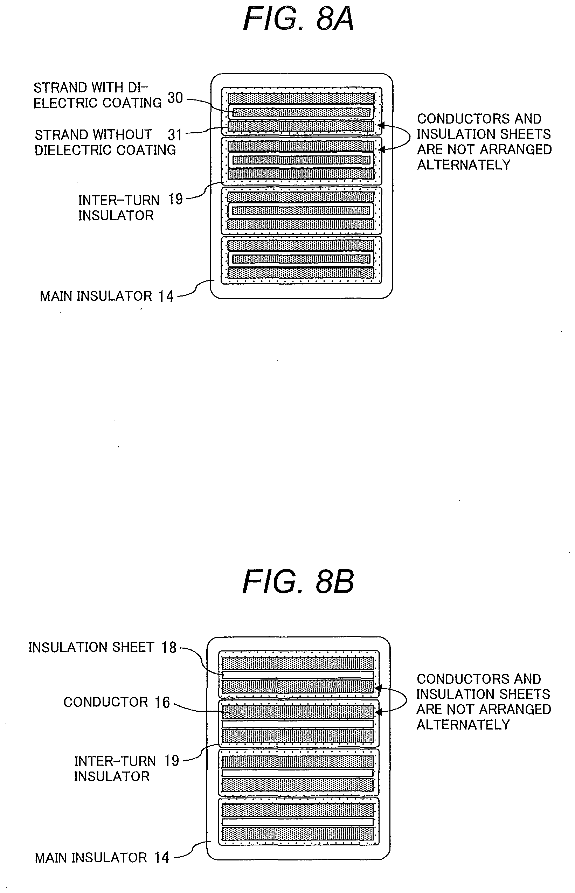

FIGS. 8A and 8B show partial sectional views of a stator winding of a rotating electric machine according to a fourth embodiment of the present invention. The fourth embodiment differs from the first to third embodiments in that one turn is configured by a plurality of strands and insulation is performed on an individual turn basis. Here, the turn refers to an aggregation of a plurality of strands whose conductor parts have substantially the same potential.

In the stator winding shown in FIG. 8A, the configuration of the third embodiment is partially applied. Specifically, two strands 31 without a dielectric coating and one strand 30 with a dielectric coating configure one turn. These three strands are laid with the strand 30 with a dielectric coating in middle in a manner such that a thickness direction of each conductor becomes a radial direction of the rotating electric machine. The stator winding of FIG. 8A includes a plurality of turns, i.e. four turns, each of which is provided with an inter-tern insulator 19 coated with a dielectric substance such as a mica tape. Thus, insulation between the adjacent turns is ensured by the inter-turn insulator 19 provided to each turn. These plurality of turns are laminated in a manner such that a thickness direction of each conductor becomes the radial direction of the rotating electric machine, and such a laminated body is coated with a main insulator 14, forming one stator winding.

For the stator winding shown in FIG. 8B, the configuration of the second embodiment is partially applied. Specifically, it is different from FIG. 8A in that two strands 31 without a dielectric coating and one insulation sheet 18 configure one turn. These strands and insulation sheet are laid with the insulation sheet 18 in middle in a manner such that a thickness direction of each conductor becomes the radial direction of the rotating electric machine. Other configuration of the stator winding is the same as that of FIG. 8A.

Here, the number of turns of the stator winding 13 is set in a manner such that desired properties of the rotating electric machine for the specifications of the rotating electric machine (input voltage, an outer diameter of the rotating electric machine, a deposition thickness, etc.). Moreover, in view of productivity, there arises limitation on a thickness dimension of a conductor that can be handled. Under such limitation, according to the fourth embodiment, as described below, a plurality of thin conductors whose thickness is set at a value equal to or less than the skin depth provided by the permeance pulsation frequency can be used to fabricate, with favorable productivity, a rotating electric machine with stator windings, for which insulation between the conductors is ensured, being wound a desired number of times.

In the fourth embodiment, through insulation of each turn, the insulation between the conductors can be ensured not necessarily by alternately arranging the strands 30 with a dielectric coating and the lines 31 without a dielectric coating. This can improve a degree of freedom in arrangement of the conductors 16 in the stator winding 13. Further, preparing turns composed of a laminate of a plurality of strands makes it easy to perform member support and processing in manufacturing processes even by using the plurality of thin conductors whose thickness is set at the value equal to or less than the skin depth provided by the permeance pulsation frequency, which improves the productivity.

As described above, according to the fourth embodiment, in addition to reduction in the spatial harmonic loss provided by the permeance pulsation frequency and reduction in the DC loss of the stator winding, a degree of freedom in configuration of the stator winding using the thin conductors for reducing the harmonic loss of the rotating electric machine improves, thus making it possible to realize a rotating electric machine having desired performance with high efficiency.

Fifth Embodiment

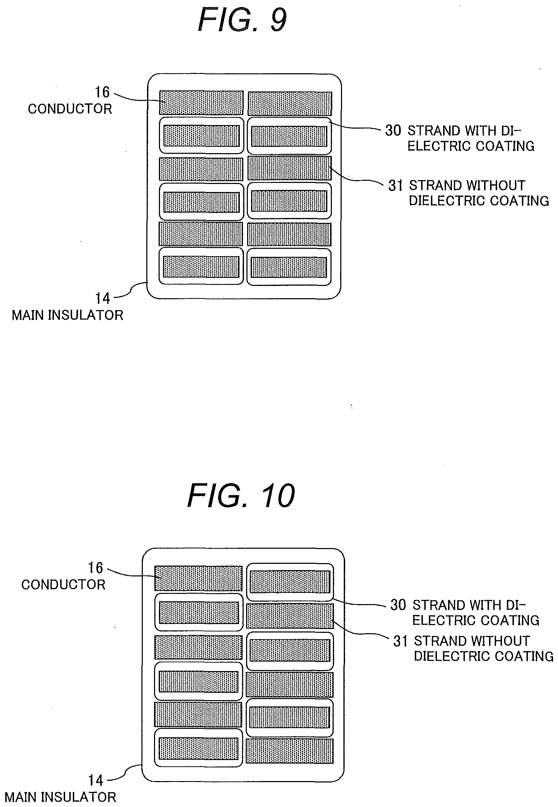

FIG. 9 shows a partial sectional view of a stator winding of a rotating electric machine according to a fifth embodiment of the present invention.

In the fifth embodiment, as is the case with the third embodiment, strands 30 with a dielectric coating and strands 31 without a dielectric coating are alternately laid in a slot height direction in a cross section of a stator slot, that is, a radial direction of the rotating electric machine. Further, the fifth embodiment differs from the third embodiment in that a plurality of strands are arranged in a plurality of rows, two rows in the fifth embodiment. Thus, if a dimension and shape of the stator slot are the same as those of the second embodiment, a width of the conductor 16 of one strand in the fifth embodiment is smaller than that in the third embodiment. Between the rows, the strands 30 with a dielectric coating and the strands 31 without a dielectric coating are respectively adjacent to each other in a horizontal direction.

According to the fifth embodiment, an aspect ratio between a width and a thickness of the conductor 16 (width/thickness) in a cross section of the conductor 16 can be reduced, thus making it possible to suppress an excessive aspect ratio even by using a thin conductor whose thickness is set at the value equal to or less than the skin depth provided by the permeance pulsation frequency.

The excessive aspect ratio of the conductor 16 results in an extreme difference in easiness (or difficulty) of bending between a thin direction and a thick direction of the conductor 16, thus making it difficult to perform machining. In contrast, according to the fifth embodiment, since the aspect ratio of the conductor 16 can be reduced, the difficulty in the machining can be reduced even by using the plurality of thin conductors whose thickness is set at the value equal to or less than the skin depth provided by the permeance pulsation frequency, which improves the productivity.

In the fifth embodiment, the number of rows of the strands arrayed are two, but it is not limited to this and thus three or more rows may be used. Moreover, in the fifth embodiment, the number of rows of strands arrayed are plural based on the third embodiment, but the number of rows of strands arrayed may be plural in a different embodiment.

As described above, according to the fifth embodiment, in addition to reduction in the spatial harmonic loss provided by the permeance pulsation frequency and reduction in the DC loss of the stator winding, the productivity of the rotating electric machine can be improved with high efficiency.

Sixth Embodiment

FIG. 10 shows a partial sectional view of a stator winding of a rotating electric machine according to a sixth embodiment of the present invention.

In the sixth embodiment, as in the fifth embodiment described above, strands 30 with a dielectric coating and strands 31 without a dielectric coating are laid alternately in a plurality of rows in a slot height direction in a cross section of a stator slot, that is, a radial direction of the rotating electric machine. Further, the sixth embodiment differs from the fifth embodiment in that, between the rows, the strand 30 with a dielectric coating and the strand 31 without a dielectric coating are adjacent to each other in a horizontal direction. As a result, between the rows, the dielectric coating of the strand 30 having the dielectric coating lies, and thus insulation performance between the rows of the strands improves. Therefore, the rotating electric machine can be provided with a higher voltage.

As described above, according to the sixth embodiment, in addition to reduction in the spatial harmonic loss provided by the permeance pulsation frequency and reduction in the DC loss of the stator winding, the rotating electric machine can be provided with the higher voltage, thus permitting an improvement in output of the rotating electric machine and also increased efficiency to be achieved.

Seventh Embodiment

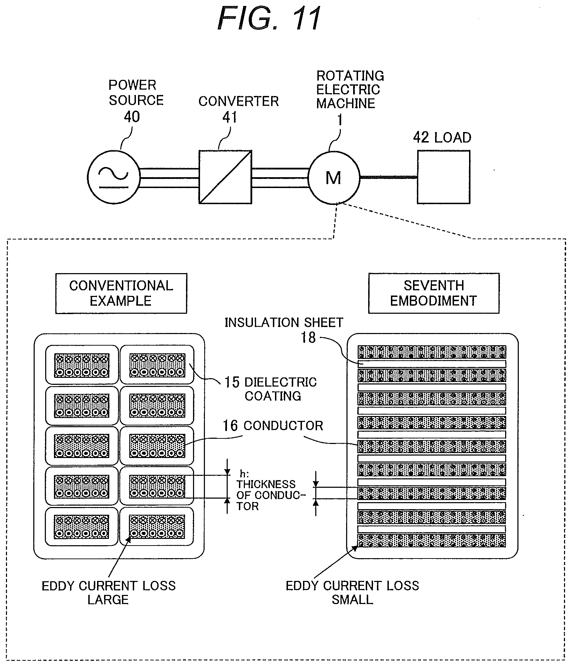

FIG. 11 shows a rotating electric machine driving system according to the seventh embodiment of the present invention.

In the seventh embodiment, three-phase AC power supplied from a power source 40 is converted by a converter 41 into three-phase AC power having a different frequency and voltage, and the three-phase AC power obtained through the conversion drives the rotating electric machine 1 into rotation. Then by rotational output of the rotating electric machine 1, a load 42, for example, a railway vehicle as described below is driven. Note that applied as the converter 41 can be: a power converter which first converts the three-phase AC power supplied from the power source 40 into DC power and then converts it into three-phase AC power by an inverter circuit; or a so-called matrix converter which converts the three-phase AC power supplied from the power source 40 directly into three-phase AC power having a different frequency and voltage without converting it into DC power.

Applied as the rotating electric machine 1 according to the seventh embodiment is the aforementioned rotating electric machine according to the second embodiment (see FIG. 4). Thus, the spatial harmonic loss provided by the permeance pulsation frequency and also the DC loss in the rotating electric machine 1 can be reduced, thus reducing power loss in the rotating electric machine driving system, which permits increased efficiency of this system.

Further, according to this embodiment, a stator winding of the rotating electric machine 1 has a thin conductor whose thickness is set at the value equal to or less than the skin depth provided by the permeance pulse frequency, thus permitting reduction in a loss (time-harmonic loss) caused by a proximity effect and a skin effect attributable to a harmonic current flowing to the stator winding by a harmonic component contained in a voltage waveform outputted by the converter 41.

As described above, according to the seventh embodiment, the spatial harmonic loss attributable to the permeance pulsation frequency and the time-harmonic loss attributable to the harmonic component of the voltage waveform outputted by the converter, which occur in the rotating electric machine, can be reduced, thus considerably reducing a power loss of the rotating electric machine driving system, which permits a considerable improvement in efficiency of this system.

Note that the rotating electric machine 1 is not limited to the rotating electric machine of the second embodiment, and may be any of the rotating electric machines of the first and three to sixth embodiments (see FIGS. 1 and 7 to 10). Moreover, the converter 41 is not limited to the one which inputs three-phase AC power as source power, but may be the one which input single-phase AC power or DC power.

Eighth Embodiment

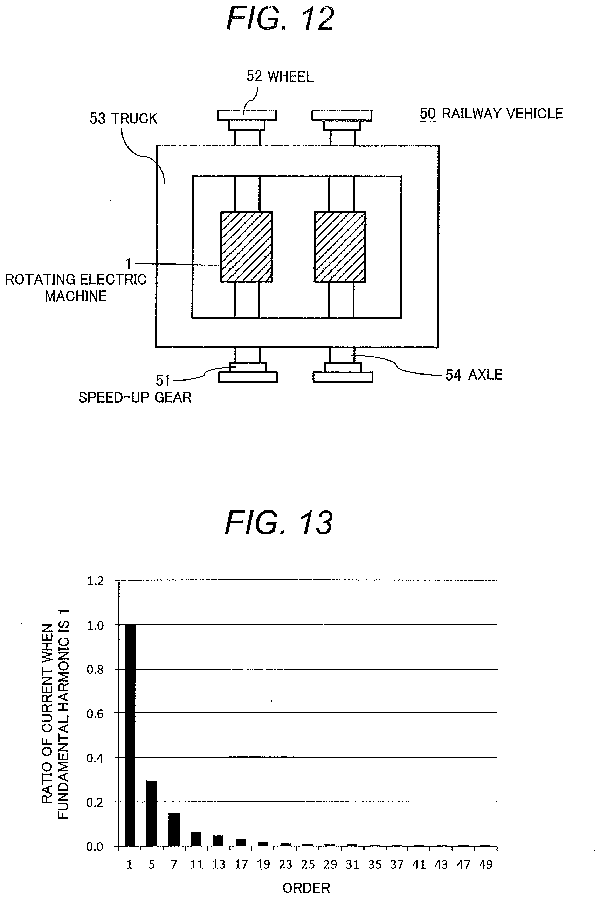

FIG. 12 shows a railway vehicle according to the eighth embodiment of the present invention.

As shown in FIG. 12, a railway vehicle 50 includes: a truck 53; a plurality of wheels 52 rotationally pivoted by vehicle axles 54 to the truck with speed-up gears 51 in between; and a plurality of (two) rotating electric machines 1 which are mechanically connected to the plurality of wheels 52 with the speed-up gears 51 in between and which drive the plurality of (four) wheels 52. As described above, a driving system of the eighth embodiment is configured of single-axle and single motor. The rotating electric machine 1 configures the aforementioned rotating electric machine driving system according to the seventh embodiment (see FIG. 11) together with a convertor (not shown) mounted in the railway vehicle 50. Therefore, as the rotating electric machine 1 shown in FIG. 12, the aforementioned rotating electric machine of the second embodiment (see FIG. 4) is applied. In the eighth embodiment, the converter (not shown) inputs source power from an overhead contact line or an electricity storage system mounted in a railway vehicle, etc.

In the eighth embodiment, the driving system adopts a driving method of driving two axles with the single-axle and-single motor, and includes a total of two rotating electric machines, but is not limited to this, and thus a different driving method may be used to include one or three or more rotating electric machines.

There are needs of improvement in muximum output on the rotating electric machine for a railway vehicle under the limited DC power from an overhead contact line to improve regenerative electric power and the like , and thus it is required to provide a large voltage effective value inputted into the rotating electric machine as much as possible. Thus, in a speed region equal to or greater than a certain degree of speed of the railway vehicle, a synchronous one-pulse voltage waveform using a modulation factor of up to 100% with PWM (pulse width modulation) is outputted from the converter to drive the rotating electric machine. Setting the modulation factor at 100% can provide a large voltage effective value while a large amount of harmonic component is superposed on a current flowing to the rotating electric machine.

FIG. 13 shows one example of relationship between an order of a harmonic and a ratio of a high harmonic component with respect to a fundamental harmonic. FIG. 13 shows comparison in magnitudes of a harmonic current flowing to a stator winding when a PWM voltage waveform inputted to the rotating electric machine is synchronous one pulse.

As shown in FIG. 13, the ratio of the low-order harmonic current is large, the ratio becomes smaller with an increase in the order, and a component with the order larger than the twenty-third order becomes almost zero. Based on such relationship, in the rotating electric machine 1 according to the eighth embodiment, it is preferable that a thickness h of a conductor of the stator winding be a value equal to or more than the skin depth provided by the permeance pulsation frequency as described above, more preferably, a value equal to or less than a value that can be calculated by formulae (1), (5), and (6), and also as shown in formula (9), is a value equal to or less than a skin depth d' for the twenty-third-order harmonic component of three-phase AC power outputted by the power source driving the rotating electric machine 1 at a maximum rotation speed, that is, the converter 41 (FIG. 11). In formula (9), a frequency $f_{max}$ (Hz) is a frequency of a fundamental harmonic component of the three-phase AC power driving the rotating electric machine at the maximum rotation speed.

$$h \leq d' = (\rho / (\pi \cdot 23 \ fmax \cdot \mu))^{0.5} ... (9) .$$

As described above, the eighth embodiment can provide a high-efficiency railway vehicle with both a reduced time-harmonic loss at time of one-pulse driving specific to the railway vehicle and a reduced spatial harmonic loss provided by a permeance pulsation frequency.

The present invention is not limited to the first to eighth embodiments, and various modified embodiments are included therein. For example, each of the embodiments above is described in detail for easier understanding of the present invention, and thus is not necessarily limited to those which include all the configuration described above. Moreover, it is possible to add and delete other configuration and replace it with part of the configuration of each embodiment.

For example, the aforementioned rotating electric machine and rotating electric machine driving system are not limited to railway vehicles, and can be applied to a pump system driving, for example, a compressor with the rotating electric machine, a drilling system driving, for example, a drilling drill with the rotating electric machine, a chipping system driving, for example, a chipping mill with the rotating electric machine, a fan system driving a fan with the rotating electric machine, etc. In particular, use of a system using the rotating electric machine with a large ratio of a spatial harmonic loss at high-speed rotation can provide large efficiency improvement.

**Claims**

1. A rotating electric machine (1) comprising:

    a stator (10) having a stator winding (13) including a plurality of conductors (16); and
    a rotor (20) opposing the stator (10) with a gap in between and having a plurality of rotor slots (21), the rotating electric machine (1) being **characterized in that** each thickness of the plurality of conductors (16) is set at a value equal to or less than a skin depth in the plurality of conductors (16) for a spatial harmonic of an interlinkage magnetic flux passing in the stator winding (13) due to a spatial pulsation of a permeance caused in the gap by the plurality of rotor slots (21) and a rotation of the rotor (20).

2. The rotating electric machine (1) according to claim 1, wherein
    the stator (10) includes a stator core having a stator slot storing the stator winding (13), and
    the rotor includes a rotor core having the plurality of rotor slots (21) on an outer circumference side.

3. The rotating electric machine (1) according to claim 2, wherein
    the plurality of rotor slots (21) are open on a side of the stator.

4. The rotating electric machine (1) according to claim 2 or 3, wherein
    where electric resistivity of the conductor (16) is $\rho(\Omega \cdot m)$, magnetic permeability of the conductor is $\mu$ (H/m), the number of the plurality of rotor slots (21) is $N_2$, a maximum rotation speed of the rotor is $n_{max}$ ($min^{-1}$), and slip is s, each thickness h (m) of the plurality of conductors satisfies following formula:

$$h \le (\rho \cdot 60 \cdot (1-s) / (\pi \cdot \mu \cdot n_{max} \cdot N_2))^{0.5}.$$

5. The rotating electric machine (1) according to at least one of the claims 1-4, wherein
    the plurality of conductors (16) are configured of a plurality of strands insulated from each other.

6. The rotating electric machine (1) according to claim 5, wherein
    the plurality of strands are configured of a plurality of naked strands and are insulated from each other by a plurality of dielectric members arranged alternately with the plurality of strands.

7. The rotating electric machine (1) according to claim 5, wherein
    the plurality of strands include: a plurality of first strands with a dielectric coating; and a plurality of second strands configured of a naked strand, the plurality of first strands and the plurality of second strands are alternately arranged, and the plurality of strands are insulated from each other by the dielectric coating of the second strands.

8. The rotating electric machine (1) according to claim 5, wherein
    the plurality of strands include: a plurality of first strands with a first dielectric coating and a plurality of second strands configured of a naked strand, both of which belong to one turn,
    the plurality of first strands and the plurality of second strands are insulated from each other by the first dielectric coating, and
    the one turn has a second dielectric coating and is insulated from a different turn by the second dielectric coating.

9. The rotating electric machine (1) according to claim 5, wherein

the plurality of strands include a plurality of first strands which belong to one turn and which are configured of a naked strand,

the plurality of first strands are insulated from each other by a dielectric member, and

the one turn has a dielectric coating and is insulated from a different turn by the dielectric coating.

10. The rotating electric machine (1) according to claim 7 or 8, wherein
the plurality of first strands and the plurality of second strands are arrayed in a plurality of rows.

11. The rotating electric machine (1) according to claim 10, wherein
of the plurality of rows, between the adjacent rows, the plurality of first strands are adjacent to each other, and the plurality of second strands are adjacent to each other.

12. The rotating electric machine (1) according to claim 10, wherein
between the adjacent rows in the plurality of rows, the first strands and the second strands are adjacent to each other.

13. A rotating electric machine (1) driving system comprising:

a converter (41) converting power inputted from a power source into three-phase AC power and outputting the power; and

a rotating electric machine (1) according to claim 1, being driven into rotation by the three-phase AC power outputted by the converter

14. The rotating electric machine (1) driving system according to claim 13, wherein
each thickness h (m) of the plurality of conductors with respect to a frequency $f_{max}$ (Hz) of the three-phase AC power at a maximum rotation speed (min⁻¹) of the rotating electric machine satisfies formula below:

$$h \leq (\rho / (\pi \cdot 23 \cdot f_{max} \cdot \mu))^{0.5}.$$

15. A railway vehicle comprising:

a truck (53);

a plurality of wheels (52) rotationally pivoted at the truck; and

a rotating electric machine (1) according to claim 1, driving the plurality of wheels.

**Patentansprüche**

1. Rotierende elektrische Maschine (1), die Folgendes umfasst:

einen Stator (10), der eine Statorwicklung (13) aufweist, die mehrere Leiter (16) enthält, und
einen Rotor (20) gegenüber dem Stator (10) mit einem Spalt dazwischen, der mehrere Rotornuten (21) aufweist; wobei die rotierende elektrische Maschine (1) **dadurch gekennzeichnet ist, dass** jede Dicke der mehreren Leiter (16) auf einen Wert eingestellt ist, der gleich oder kleiner ist als eine Eindringtiefe in die mehreren Leiter (16) für eine räumliche Oberschwingung eines verkettenden magnetischen Flusses, der in der Statorwicklung (13) aufgrund eines räumlichen Wechsels eines magnetischen Leitwerts, der in dem Spalt durch die mehreren Rotornuten (21) und eine Drehung des Rotors (20) verursacht wird, verläuft.

2. Rotierende elektrische Maschine (1) nach Anspruch 1, wobei
der Stator (10) einen Statorkern enthält, der eine Statornut aufweist, die die Statorwicklung (13) aufnimmt, und
der Rotor einen Rotorkern enthält, der auf einer äußeren Umfangsseite mehrere Rotornuten (21) aufweist.

3. Rotierende elektrische Maschine (1) nach Anspruch 2, wobei die mehreren Rotornuten (21) auf einer Seite des Stators offen sind.

4. Rotierende elektrische Maschine (1) nach Anspruch 2 oder 3, wobei
wobei dann, wenn der spezifische elektrische Widerstand des Leiters (16) $\rho$ ($\Omega \cdot m$) ist, die magnetische Permeabilität

des Leiters $\mu$(H/m) ist, die Anzahl der mehreren Rotornuten (21) $N_2$ ist, eine maximale Drehzahl des Rotors $n_{max}$ (min$^{-1}$) ist und der Schlupf s ist, jede Dicke h (m) der mehreren Leiter die folgende Formel erfüllt:

$$h \le (\rho \cdot 60 \cdot (1 - s)/(\pi \cdot \mu \cdot n_{max} \cdot N_2))^{0,5}.$$

5. Rotierende elektrische Maschine (1) nach mindestens einem der Ansprüche 1-4, wobei
die mehreren Leiter (16) aus mehreren Adern konfiguriert sind, die voneinander isoliert sind.

6. Rotierende elektrische Maschine (1) nach Anspruch 5, wobei
die mehreren Adern aus mehreren blanken Adern konfiguriert sind und durch mehrere dielektrische Elemente, die abwechselnd mit den mehreren Adern angeordnet sind, voneinander isoliert sind.

7. Rotierende elektrische Maschine (1) nach Anspruch 5, wobei
die mehreren Adern Folgendes umfassen: mehrere erste Adern mit einer dielektrischen Beschichtung und mehrere zweite Adern, die aus einer blanken Ader konfiguriert sind, wobei die mehreren ersten Adern und die mehreren zweiten Adern abwechselnd angeordnet sind und die mehreren Adern durch die dielektrische Beschichtung der zweiten Adern voneinander isoliert sind.

8. Rotierende elektrische Maschine (1) nach Anspruch 5, wobei
die mehreren Adern Folgendes umfassen: mehrere erste Adern mit einer ersten dielektrischen Beschichtung und mehrere zweite Adern, die aus einer blanken Ader konfiguriert sind, die beide zu einer Windung gehören,
die mehreren ersten Adern und die mehreren zweiten Adern durch die erste dielektrische Beschichtung voneinander isoliert sind und
die eine Windung eine zweite dielektrische Beschichtung aufweist und durch die zweite dielektrische Beschichtung von einer anderen Windung isoliert ist.

9. Rotierende elektrische Maschine (1) nach Anspruch 5, wobei
die mehreren Adern mehrere erste Adern umfassen, die zu einer Windung gehören und die als blanke Adern konfiguriert sind,
die mehreren ersten Adern durch ein dielektrisches Element voneinander isoliert sind und
die eine Windung eine dielektrische Beschichtung aufweist und durch die dielektrische Beschichtung von einer anderen Windung isoliert ist.

10. Rotierende elektrische Maschine (1) nach Anspruch 7 oder 8, wobei
die mehreren ersten Adern und die mehreren zweiten Adern in mehreren Reihen angeordnet sind.

11. Rotierende elektrische Maschine (1) nach Anspruch 10, wobei
von den mehreren Reihen unter den benachbarten Reihen die mehreren ersten Adern zueinander benachbart sind und die mehreren zweiten Adern zueinander benachbart sind.

12. Rotierende elektrische Maschine (1) nach Anspruch 10, wobei
unter den benachbarten Reihen in den mehreren Reihen die ersten Adern und die zweiten Adern zueinander benachbart sind.

13. Antriebssystem mit einer rotierenden elektrischen Maschine (1), das Folgendes umfasst:

einen Umrichter (41), der Leistung, die von einer Leistungsquelle eingegeben wird, in dreiphasige AC-Leistung umsetzt und die Leistung ausgibt, und
eine rotierende elektrische Maschine (1) nach Anspruch 1, die durch die dreiphasige AC-Leistung, die durch den Umrichter ausgegeben wird, rotatorisch angetrieben wird.

14. Antriebssystem mit einer rotierenden elektrischen Maschine (1) nach Anspruch 13, wobei
jede Dicke h (m) der mehreren Leiter in Bezug auf eine Frequenz fmax (Hz) der dreiphasigen AC-Leistung bei einer maximalen Drehzahl (min$^{-1}$) der rotierenden elektrischen Maschine die Formel unten erfüllt:

$$h \le (\rho/(\pi \cdot 23 \cdot f_{max} \cdot \mu))^{0,5}.$$

**15.** Schienenfahrzeug, das Folgendes umfasst:

ein Drehgestell (53);
mehrere Räder (52), die an dem Drehgestell drehbar gelagert sind, und
eine rotierende elektrische Maschine (1) nach Anspruch 1, die die mehreren Räder antreibt.

**Revendications**

**1.** Machine électrique rotative (1) comprenant :

un stator (10) ayant un enroulement de stator (13) incluant une pluralité de conducteurs (16) ; et
un rotor (20) à l'opposé du stator (10) avec un intervalle entre eux et ayant une pluralité de fentes de rotor (21), la machine électrique rotative (1) étant **caractérisée en ce que** chaque épaisseur de la pluralité de conducteurs (16) est fixée à une valeur égale ou inférieure à une profondeur de peau dans la pluralité de conducteurs (16) pour une harmonique spatiale d'un flux magnétique de liaison passant dans l'enroulement de stator (13) en raison d'une pulsation spatiale d'une perméance provoquée dans l'intervalle par la pluralité de fentes de rotor (21) et par une rotation du rotor (20).

**2.** Machine électrique rotative (1) selon la revendication 1,
dans laquelle
le stator (10) inclut un noyau de stator ayant une fente de stator qui stocke l'enroulement de stator (13), et
le rotor inclut un noyau de rotor ayant la pluralité de fentes de rotor (21) sur un côté circonférentiel extérieur.

**3.** Machine électrique rotative (1) selon la revendication 2, dans laquelle la pluralité de fentes de rotor (21) sont ouvertes sur un côté du stator.

**4.** Machine électrique rotative (1) selon la revendication 2 ou 3, dans laquelle lorsque la résistivité électrique du conducteur (16) est $\rho$ ($\Omega \cdot m$), la perméabilité magnétique du conducteur est $\mu$(H/m), le nombre de la pluralité de fentes de rotor (21) est $N_2$, une vitesse de rotation maximum du rotor est $n_{max}$ (min$^{-1}$), et le glissement est s, chaque épaisseur h (m) de la pluralité de conducteurs satisfait la formule suivante :

$$h \le (\rho \cdot 60 \cdot (1-s)/(\pi \cdot \mu \cdot n_{max} \cdot N_2))^{0,5}.$$

**5.** Machine électrique rotative (1) selon l'une au moins des revendications 1 à 4, dans laquelle
la pluralité de conducteurs (16) sont configurés par une pluralité de brins isolés les uns des autres.

**6.** Machine électrique rotative (1) selon la revendication 5, dans laquelle
la pluralité de brins sont configurés par une pluralité de brins nus et sont isolés les uns des autres par une pluralité d'éléments diélectriques agencés en alternance avec la pluralité de brins.

**7.** Machine électrique rotative (1) selon la revendication 5, dans laquelle
la pluralité de brins inclut : une pluralité de premiers brins avec un revêtement diélectrique ; et une pluralité de seconds brins configurés par des brins nus, la pluralité de premiers brins et la pluralité de seconds brins étant agencés en alternance, et la pluralité de brins sont isolés les uns des autres par le revêtement diélectrique des seconds brins.

**8.** Machine électrique rotative (1) selon la revendication 5, dans laquelle
la pluralité de brins inclut : une pluralité de premiers brins avec un premier revêtement diélectrique et une pluralité de seconds brins configurés par des brins nus, les deux pluralités appartenant à une spire,
la pluralité de premiers brins et la pluralité de seconds brins sont isolés les uns des autres par le premier revêtement diélectrique, et
ladite spire comporte un second revêtement diélectrique et est isolée d'une spire différente par le second revêtement diélectrique.

9. Machine électrique rotative (1) selon la revendication 5, dans laquelle
la pluralité de brins inclut une pluralité de premiers brins qui appartiennent à une spire et qui sont configurés par des brins nus,
la pluralité de premiers brins sont isolés les uns des autres par un élément diélectrique, et
ladite spire comporte un revêtement diélectrique et est isolée d'une spire différente par le revêtement diélectrique.

10. Machine électrique rotative (1) selon la revendication 7 ou 8, dans laquelle
la pluralité de premiers brins et la pluralité de seconds brins sont agencés dans une pluralité de rangées.

11. Machine électrique rotative (1) selon la revendication 10, dans laquelle
parmi la pluralité de rangées, entre des rangées adjacentes, la pluralité de premiers brins sont adjacents les uns aux autres, et la pluralité de seconds brins sont adjacents les uns aux autres.

12. Machine électrique rotative (1) selon la revendication 10, dans laquelle
entre les rangées adjacentes dans la pluralité de rangées, les premiers brins et les seconds brins sont adjacents les uns aux autres.

13. Système d'entraînement pour machine électrique rotative (1), comprenant :

un convertisseur (41) qui convertit une puissance injectée depuis une source de puissance en une puissance à courant alternatif triphasé et qui délivre la puissance ; et
une machine électrique rotative (1) selon la revendication 1, qui est pilotée en rotation par la puissance en courant alternatif triphasé délivrée par le convertisseur.

14. Système d'entraînement pour machine électrique rotative (1) selon la revendication 13, dans lequel
chaque épaisseur h (m) de la pluralité de conducteurs, par rapport à une fréquence $f_{max}$ (Hz) de la puissance en courant alternatif triphasé à une vitesse de rotation maximum (min$^{-1}$) de la machine électrique rotative satisfait la formule suivante :

$$h \leq (\rho/(\pi \cdot 23 \cdot f_{max} \cdot \mu))^{0,5}.$$

15. Véhicule ferroviaire comprenant :

une motrice (53) ;
une pluralité de roues (52) capable de pivoter en rotation sur la motrice ; et
une machine électrique rotative (1) selon la revendication 1, qui entraîne la pluralité de roues.

# FIG. 1

A-A' PARTIALLY ENLARGED SECTIONAL VIEW

STATOR SLOT
STATOR CORE  12
11          STATOR
STATOR          WINDING
10              13

A

A'

SHAFT
25
1
ROTATING
ELECTRIC
MACHINE

20
ROTOR

22
ROTOR BAR

21
ROTOR SLOT

26
ROTOR
CORE
STOPPER

23
END RING

STATOR  10
STATOR CORE  11
STATOR SLOT  12
STATOR
WINDING  13
14
MAIN INSULATOR
DIELECTRIC  15
COATING
CONDUCTOR 16
WEDGE  17
ROTOR  20
ROTOR SLOT  21
ROTOR BAR  22
ROTOR CORE  24

PARTIALLY
ENLARGED VIEW          16 CONDUCTOR

h: THICKNESS OF
CONDUCTOR

15 DIELECTRIC COATING (STRAND)

$$h \le \sqrt{\frac{\rho \cdot 60 \cdot (1 - s)}{\pi \cdot \mu \cdot n_{max} \cdot N_2}}$$

# FIG. 2

10 STATOR
11 STATOR CORE
12 STATOR SLOT
13 STATOR WINDING
16 CONDUCTOR

PULSATING MAGNETIC FLUX ATTRIBUTABLE TO THE NUMBER OF ROTOR SLOTS

20 ROTOR
24 ROTOR CORE
21 ROTOR SLOT
22 ROTOR BAR

PARTIALLY ENLARGED VIEW

PULSATING MAGNETIC FLUX ATTRIBUTABLE TO THE NUMBER OF ROTOR SLOTS

16 CONDUCTOR

EDDY CURRENT FLOWS IN A DIRECTION CANCELLING PULSATING MAGNETIC FLUX, CAUSING LOSS IN STATOR WINDING

## FIG. 3

Y-axis: RATIO OF THICKNESS OF CONDUCTOR WITH RESPECT TO REFERENCE (p.u.)

X-axis: PERMEANCE PULSATION FREQUENCY AT MAXIMUM ROTATION SPEED (Hz)

REGION NOT CONSIDERING SPATIAL HARMONIC

EXISTING ROTATING ELECTRIC MACHINE FOR RAILWAY

0.6 (p.u)

RANGE OF FIRST EMBODIMENT

# FIG. 4

| CONVENTIONAL EXAMPLE | SECOND EMBODIMENT |
|---|---|

STRAND WITH DIELECTRIC COATING
30

STRAND WITHOUT DIELECTRIC COATING
31    (NAKED STRAND)

INSULATION SHEET
18

15 DIELECTRIC COATING

16 CONDUCTOR

h:
THICKNESS OF CONDUC-TOR

14 MAIN INSULATOR

INSULATED PORTION ELIMINABLE BY SECOND EMBODIMENT

# FIG. 5

# FIG. 6

| CONVENTIONAL EXAMPLE | WHEN STRAND WITH DIELECTRIC COATING IS THINNED | SECOND EMBODIMENT |

STRAND WITHOUT DIELECTRIC COATING

30 STRAND WITH DIELECTRIC COATING          31          (NAKED STRAND)

15 DIELECTRIC COATING          16 CONDUCTOR          18 INSULATION SHEET

|  | CONVENTIONAL | WHEN STRAND WITH DIELECTRIC COATING IS THINNED | THIS EMBODIMENT |
|---|---|---|---|
| DC LOSS | SMALL SINCE LAMINATION FACTOR IS HIGH | GREAT SINCE LAMINATION FACTOR IS LOW | SMALL SINCE LAMINATION FACTOR IS HIGH |
| AC LOSS | GREAT SINCE THICKNESS OF CONDUCTOR IS LARGE | SMALL SINCE THICKNESS OF CONDUCTOR IS SMALL | SMALL SINCE THICKNESS OF CONDUCTOR IS SMALL |

# FIG. 7

| CONVENTIONAL EXAMPLE | THIRD EMBODIMENT |

STRAND WITHOUT DIELECTRIC COATING
31

15 DIELECTRIC COATING          16 CONDUCTOR          30 STRAND WITH DIELECTRIC COATING

# FIG. 8A

STRAND WITH DI-
ELECTRIC COATING 30

STRAND WITHOUT 31
DIELECTRIC COATING

CONDUCTORS AND
INSULATION SHEETS
ARE NOT ARRANGED
ALTERNATELY

INTER–TURN 19
INSULATOR

MAIN INSULATOR 14

# FIG. 8B

INSULATION SHEET 18

CONDUCTOR 16

CONDUCTORS AND
INSULATION SHEETS
ARE NOT ARRANGED
ALTERNATELY

INTER–TURN 19
INSULATOR

MAIN INSULATOR 14

## FIG. 9

16
CONDUCTOR

30 STRAND WITH DI-
ELECTRIC COATING

31 STRAND WITHOUT
DIELECTRIC COATING

14
MAIN INSULATOR

## FIG. 10

16
CONDUCTOR

30 STRAND WITH DI-
ELECTRIC COATING

31 STRAND WITHOUT
DIELECTRIC COATING

14
MAIN INSULATOR

# FIG. 11

POWER
SOURCE
40

CONVERTER
41

ROTATING
ELECTRIC
MACHINE
1

42 LOAD

CONVENTIONAL
EXAMPLE

SEVENTH
EMBODIMENT

INSULATION SHEET
18

15 DIELECTRIC
COATING

16 CONDUCTOR

h:
THICKNESS
OF CONDUC-
TOR

EDDY CURRENT LOSS
LARGE

EDDY CURRENT LOSS
SMALL

# FIG. 12

# FIG. 13

**EP 3 012 944 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012146473 A
- JP 2012039836 A
- JP 2002027693 A
- JP 2014023413 A

- JP 2011087373 A
- US 2005206263 A1
- US 8546991 B2
- US 6794777 B1